Europäisches Patentamt

European Patent Office

Office européen des brevets

(11) Veröffentlichungsnummer: **0 277 630**
**A1**

(12) **EUROPÄISCHE PATENTANMELDUNG**

(21) Anmeldenummer: **88101452.6**

(22) Anmeldetag: **02.02.88**

(51) Int. Cl.4: **C08G 18/66 , C08L 59/00**

(30) Priorität: **04.02.87 DE 3703232**

(43) Veröffentlichungstag der Anmeldung:
**10.08.88 Patentblatt  88/32**

(84) Benannte Vertragsstaaten:
**BE DE ES FR GB IT NL**

(71) Anmelder: **BASF Aktiengesellschaft**
**Carl-Bosch-Strasse 38**
**D-6700 Ludwigshafen(DE)**

(72) Erfinder: **Goerrissen, Heiner, Dr.**
**Berner Weg 24**
**D-6700 Ludwigshafen(DE)**
Erfinder: **Zeitler,Gerhard, Dr.**
**Lessingstrasse 11**
**D-6717 Hessheim(DE)**
Erfinder: **Saenger, Dietrich, Dr.**
**Lorcher Ring 16a**
**D-6710 Frankenthal(DE)**
Erfinder: **Heinz, Gerhard, Dr.**
**Im Vogelsang 2**
**D-6719 Weisenheim(DE)**

(54) **Verfahren zur Herstellung von Formmassen mit verbesserter Kälteschlagzähigkeit auf der Grundlage von Polyoximethylenen und thermoplastischen Polyurethanen.**

㊻ Die Erfindung betrifft ein Verfahren zur Herstellung von Formmassen mit verbesserter Kälteschlagzähigkeit aus (A) Polyoximethylenen und (B) thermoplastischen Polyurethanen, wobei man bei erhöhten Temperaturen Polyoximethylenhomo-und/oder -copolymerisate (A), zweckmäßigerweise in geschmolzener Form in einem Extruder

    i) mit mindestens einer Polyurethan-Aufbaukomponenten mischt und das Gemisch mit den anderen Aufbaukomponenten zur Herstellung des thermoplastischen Polyurethans (B) zur Reaktion bringt oder

    ii) vorzugsweise mit der fließfähigen Rekationsmischung zur Herstellung des thermoplastischen Polyurethans (B) mischt und diese ausreagieren läßt.

EP 0 277 630 A1

## Verfahren zur Herstellung von Formmassen mit verbesserter Kälteschlagzähigkeit auf der Grundlage von Polyoximethylenen und thermoplastischen Polyurethanen

Thermoplastisch verarbeitbare Formmassen auf der Grundlage von hochmolekularen Polyoximethylenen - im folgenden abgekürzt POM gennant -und thermoplastischen Polyurethan-Elastomeren - im folgenden abgekürzt TPU genannt - sind bekannt und werden beispielsweise beschrieben in der DE-PS 1 193 240 (GB-PS 1 017 244), DE-OS 20 51 028, DE-OS 33 03 760 (US 4 517 319), DE-OS 33 03 761 (GB-E-115 847), EP-OS 0 116 456, EP-OS 0 117 664 und der EP-OS 0 167 369 sowie den deutschen Offenlegungsschriften 36 28 559 und 36 28 562.

Formkörper aus derartigen Formmassen zeichnen sich durch gute mechanische Eigenschaften, beispielsweise Reißfestigkeit, Zähigkeit, Druckfestigkeit und Abriebfestigkeit aus.

Zur Verbesserung der Kerbschlagzähigkeit werden nach Angaben der DE-OS 33 03 760 in Gemische aus POM und TPU mit einer Shore-Härte A von höchstens 90 Füllstoffe mit einer mittleren Teilchengröße von weniger als 10 $\mu$m einverleibt.

Die thermische Stabilität von POM/TPU-Formmassen kann nach Angaben der DE-OS 36 28 559 und DE-OS 36 28 562 durch den Zusatz von speziellen Erdalkalisilikaten bzw. von Erdalkalicarbonat, Erdalkalihydroxidcarbonat, Erdalkaliglycerophosphat oder einer Mischung aus mindestens zwei der genannten Verbindungen erhöht werden.

Zur Herstellung der POM/TPU-Formmassen können POM und TPU in geeigneten Lösungsmitteln, wie z.B. Dimethylformamid, Dimethylacetamid oder $\gamma$-Butyrolacton, gelöst und die Lösungen gemischt werden. Nachteilig an dieser apparativ aufwendigen und daher kostenintensiven Methode ist, daß die Lösungsmittel anschließend wieder abgetrennt werden müssen.

Die in getrennten Verfahren hergestellten POM und TPU werden daher üblicherweise in Granulatform bei Raumtemperatur gemischt und die Mischung aufgeschmolzen oder vorzugsweise werden TPU und POM auf Schmelztemperatur, d.h. auf Temperaturen von ungefähr 170 bis 260° C, erhitzt und in geeigneten Vorrichtungen, wie z.B. Mischern, Knetern oder Extrudern vermischt. Aufgrund der unterschiedlichen Fließfähigkeit - TPU besitzt bei 190° C einen ungefährt um den Faktor 10 niedrigeren MFI und ist praktisch nicht fließfähig - bereitet die homogene Vermischung und/oder Dispergierung des TPU in der relativ niedrigviskosen POM-Schmelze erhebliche Schwierigkeiten. Da die teueren TPU außerdem hitze-und scherempfindlich sind, kann beim Aufschmelzen des TPU's und der Einarbeitung in POM durch Scherung ein Molekulargewichtsabbau eintreten, der eine Verschlechterung der Kälteschlagzähigkeit der erhaltenen Formmassen bewirkt.

Die Aufgabe der vorliegenden Erfindung bestand darin, die mechanischen Eigenschaften, insbesondere die Kälteschlagzähigkeit, von POM/TPU-Formmassen zu verbessern und durch eine vereinfachte Verfahrenstechnik die Produktionskosten zu minimieren.

Die Aufgabe konnte überraschenderweise dadurch gelöst werden, daß in die niedrigviskose POM-Schmelze die zu Beginn der Reaktion leicht fließfähige Reaktionsmischung zur Herstellung des TPU eingebracht und das TPU praktisch in situ in der POM-Schmelze hergestellt wird.

Gegenstand der Erfindung ist somit ein Verfahren zur Herstellung von Formmassen mit verbesserter Kälteschlagzähigkeit aus (A) Polyoximethylenen und (B) thermoplastischen Polyurethanen, das dadurch gekennzeichnet ist, daß man bei erhöhten Temperaturen Polyoximethylenhomo-und/oder -copolymerisate (A)

i) mit mindestens einer TPU-Aufbaukomponente mischt und das Gemisch mit den anderen Aufbaukomponenten zur Herstellung des thermoplastischen Polyurethans (B) zur Reaktion bringt oder

ii) vorzugsweise mit der fließfähigen Reaktionsmischung zur Herstellung des thermoplastischen Polyurethans (B) mischt und diese ausreagieren läßt.

Die nach dem erfindungsgemäßen Verfahren hergestellten POM/TPU-Formmassen zeichnen sich durch eine hervorragende Schlagzähigkeit, auch bei Temperaturen bis -40° C, aus. Die Produkte besitzen ferner eine hohe Lösungsmittelbeständigkeit und gute Eigenfarbe.

Zu den für das erfindungsgemäße Verfahren verwendbaren Polyoximethylenhomo-und/oder -copolymerisate (A) und den Aufbaukomponenten (a) bis (c), Katalysatoren (d) Hilfsmitteln und Zusatzstoffen (e) zur Herstellung der TPU (B) ist folgendes auszuführen:

Geeignete Polyoximethylene (A) sind Homopolymerisate des Formaldehyds oder Copolymerisate des Formaldehyds sowie des Trioxans mit cyclischen und/oder linearen Formalen, wie Butandiolformal oder Epoxiden, wie Ethylen-oder Propylenoxid. Die Homopolymeriste haben in der Regel thermisch stabile Endgruppen, wie Ester-oder Ethergruppen. Die Copolymerisate des Formaldehyds oder des Trioxans weisen vorteilhaft mehr als 50%, insbesondere mehr als 75% Oximethylengruppen auf. Besonders bewährt haben sich Copolymerisate, in denen mindestens 0,1% Gruppen des Comonomeren enthalten sind, die mindestens zwei benachbarte Kohlenstoffatome in der Kette haben. Besondere technische Bedeutung haben Polyoximethylene erlangt, die 1 bis 10 Gew.% Conomere enthalten. Solche Copolymerisate sind in an sich bekannter Weise durch kationische Copolymerisation von Trioxan mit geeigneten Comonomeren, wie cyclischen Ethern oder Acetalen, z.B. Ethylenoxid, 1,3-Dioxolan, 1,3-Dioxan, 1,3-Dioxacycloheptan oder mit linearen Oligo-oder Polyformalen, wie Polydioxolan oder Polybutandiolformal erhältlich. In der Regel haben die verwendeten Polyoximethylene ein Molekulargewicht (Zahlenmittel) $M_n$ von 2 000 bis 100 000, vorzugsweise von 10 000 bis 100 000 und einem MFI bei 190° C, 21, 17 N nach DIN 53 735 von 0,5 bis 200, vorzugsweise von 1 bis 100. Besondere Bedeutung haben Polymeriste, die aus Trioxan und 1 bis 10 Mol.% Ethylenoxid, 1,3-Dioxolan oder Butandiolformal aufgebaut sind, erlangt. Die nach dem erfindungsgemäßen Verfahren hergestellten POM/TPU-Formmassen enthalten zweckmäßigerweise 40 bis 95 Gew.%, vorzugsweise 60 bis 90 Gew.% mindestens eines Polyoximethylenhomo-und/oder -copolymerisats, bezogen auf das Gewicht der Komponenten (A) und (B) bzw. enthalten POM (A) und TPU (B) im Gewichtsverhältnis 95:5 bis 40:60, vorzugsweise 90:10 bis 60:40.

Als zusätzliche Comonomere für Trioxan werden gegebenenfalls noch Verbindungen mit mehreren polymerisierbaren Gruppen im Molekül, z.B. Alkylglycidylformale, Polyglykoldiglycidylether, Alkandioldiglycidylether oder Bis-(alkantriol)-triformale verwendet, und zwar in einer Menge von 0,05 bis 5 Gew.%, vorzugsweise 0,1 bis 2 Gew.%, bezogen auf die Gesamtmonomermenge.

(B) Die nach dem erfindungsgemäßen Verfahren hergestellten POM/TPU-Formmassen besitzen neben POM (A) als Basiskunststoff ein TPU (B), das in Gegenwart der POM-Schmelze hergestellt wird. Geeignete TPU (B) können beispielsweise erhalten werden durch Umsetzung von

a) organischen, vorzugsweise aromatischen Diisocyanaten,

b) Polyhydroxylverbindungen mit Molekulargewichten von 500 bis 8 000 und

c) Kettenverlängerungsmitteln mit Molekulargewichten von 60 bis 400 in Gegenwart von gegebenenfalls

d) Katalysatoren,

e) Hilfsmitteln und/oder Zusatzstoffen.

a) Als organische Diisocyanate (a) kommen beispielsweise aliphatische, cycloaliphatische und vorzugsweise aromatische Diisocyanate in Betracht. Im einzelnen seien beispielhaft genannt: aliphatische Diisocyanate, wie Hexamethylen-diisocyanat, cycloaliphatische Diisocyanate, wie Isophoron-diisocyanat, 1,4-Cyclohexan-diisocyanat, 1-Methyl-2,4-und 2,6-cyclohexandiisocyanat sowie die entsprechenden Isomerengemische, 4,4'-, 2,4'-und 2,2'-Dicyclohexylemethan-diisocyanat sowie die entsprechenden Isomerengemische und vorzugsweise aromatische Diisocyanate, wie 2,4-Toluylen-diisocyanat, Gemische aus 2,4-und 2,6-Toluylen-diisocyanat, 4,4'-, 2,4'-und 2,2'-Diphenylmethandiisocyanat, Gemische aus 2,4'-und 4,4'-Diphenylmethandiisocyanat, urethanmodifizierte flüssige 4,4' und/oder 2,4'-Diphenylmethan-diisocyanate, 4,4'-Diisocyanatodiphenylethan-(1,2) und 1,5-Naphthylen-diisocyanat. Vorzugsweise verwendet werden Hexamethylen-diisocyanat, Isophoron-diisocyanat, 1,5-Naphylen-diisocyanat, Diphenylmethan-diisocyanat-Isomerengemische mit einem 4,4'-Diphenylmethan-diisocyanatgehalt von größer als 96 Gew.% und insbesondere 4,4'-Diphenylmethandiisocyanat.

b) Als höhermolekulare Polyhydroxylverbindungen (b) mit Molekulargewichten von 500 bis 8 000 eignen sich vorzugsweise Polyetherole und Polyesterole. In Betracht kommen jedoch auch hydroxylgruppenhaltige Polymere, beispielsweise Polyacetale, wie Polyoximethylene und vor allem wasserunlösliche Formale, z.B. Polybutandiolformal und Polyhexandiolformal, und Polycarbonate, insbesondere solche aus Diphenylcarbonat und Hexandiol-1,6, hergestellt durch Umesterung, mit den oben genannten Molekulargewichten. Die Polyhydroxylverbindungen müssen zumindest überwiegend linear, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können dadurch hergestellt werden, daß man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, 1,2-und 2,3-Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-di-ethanolamine, beispielsweise N-Methyl-diethanolamin und Diole, wie Ethylenglykol, 1,3-Propylenglykol, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylen-glykole).

Vorzugsweise verwendet werden Polyetherole aus Propylenoxid-1,2 und Ethylenoxid, in denen mehr als 50%, vorzugsweise 60 bis 80% der OH-Gruppen primäre Hydroxylgruppen sind und bei denen zumindest ein Teil des Ethylenoxids als endständiger Block angeordnet ist und insbesondere Polyoxytetramethylen-glykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 8 000, vorzugsweise 600 bis 6 000 und insbesondere 800 bis 3 500. Sie können sowohl einzeln als auch in form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die dicarbonsäuren können einzeln oder als Gemische, z.B. in Form einer Bernstein-, Glutar-und Adipinsäuremischung, verwendet werden. Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie Ethylenglykol, Diethylenglykol, Butandiol-1,4, Pentandiol-1,5, Hexandiol-1,6, Decandiol-1,10, 2,2-Dimethylpropandiol-1,3, Propandiol-1,3 und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von $\omega$-Hydroxycarbonsäuren, beispielsweise $\omega$-Hydroxycapronsäure und vorzugsweise Polymerisationsprodukte von Lactonen, beispielsweise gegebenenfalls substituierten $\omega$-Caprolactonen.

Als Polyesterole vorzugsweise verwendet werden Alkylenglykolpolyadipate mit 2 bis 6 Kohlenstoffatomen im Alkylenrest, wie z.B. Ethandiolpolyadipate, 1,4-Butandiol-polyadipate, Ethandiol-butandiol-1.4-polyadipate, 1,6-Hexandiol-neopentylglykol-polyaadipate, Polycaprolactone und insbesondere 1,6-Hexandiol-1,4-butandiol-polyadipate.

Die Polyesterole besitzen Molekulargewichte von 500 bis 6 000, vorzugsweise von 800 bis 3 500.

c) Als Kettenverlängerungsmittel (c) Molekulargewichten von 60 bis 400, vorzugsweise 60 bis 300, kommen vorzugsweise aliphatische Diole mit 2 bis 12 Kohlenstoffatomen, vorzugsweise mit 2, 4 oder 6 Kohlenstoffatomen, wie z.B. Ethandiol, Hexan diol-1,6, Diethylenglykol, Dipropylenglykol und insbesondere Butandiol-1,4 in Betracht. Geeignet sind jedoch auch Diester der Terephthalsäure mit Glykolen mit 2 bis 4 Kohlenstoffatomen, wie z.B. Terephthalsäure-bis-ethylenglykol oder -butandiol-1,4, Hydroxialkylenether des Hydrochinons, wie z.B. 1,4-Di($\beta$-hydroxyethyl)-hydrochinon, (cyclo) aliphatische Diamine, wie Z.B. 4,4'-Diaminodicyclohexylmethan, 3,3'-Dimethyl-4,4'-diaminodicyclohexylmethan, Isophoro-diamin, Ethylendiamin, 1,2-, 1,3-Propylen-diamin, N-Methylpropylendiamin-1,3, N,N'-Diamethylethylendiamin und aromatische Diamine, wie z.B. 2,4-und 2,6 Toluylen-diamin, 3,5-Diethyl-2,4-und -2,6-toluylendiamin und primäre ortho-di-, tri-und/oder tetraalkylsubstituierte 4,4'-Diamino-diphenylmethane.

Zur Einstellung von Härte und Schmelzpunkt der TPU können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:0,5 bis 1:12, insbesondere von 1:1,0 bis 1:6,4, wobei die Härte und der Schemlzpunkt der TPU mit zunehmendem Gehalt an Diolen ansteigt.

Zur Herstellung der TPU werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl-und Aminogruppen der Komponenten (b) und (c) 1:0,85 bis 1,20, vorzugsweise 1:0,95 bis 1:1.05 und insbesondere 1:0,98 bis 1,02 beträgt.

(d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen, wie Titansäureester, Eisenverbindungen, wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,001 bis 0,1 Teilen pro 100 Teile Polyhydroxylverbindung (b) eingesetzt.

(e) Neben Katalysatoren (d) können den Aufbaukomponenten (a) bis (c) auch Hilfsmittel und/oder Zusatzstoffe (e) einverleibt werden. Als geeignete gegebenenfalls mitverwendbare Hilfsmittel und/oder Zusatzstoffe (e) kommen beispielsweise in Betracht: Stabilisatoren, Nukleierungsmittel, Antistatika, Licht-und Flammschutzmittel, Gleit- und Schmiermittel, Weichmacher, Pigmente, Farbstoffe, optische Aufheller, Entformungshilfsmittel und dergleichen. Als Zusatzstoff insbesondere bewährt hat sich und daher vorzugsweise eingesetzt wird ein oder mehrere Antioxidantien mit phenolischer Struktur. Derartige Antioxidantien werden beschrieben z.B. in der DE-A-27 02 661.

Als Stabilisatoren gegen den Einfluß von Wärme eignen sich insbesondere Polyamide, Amide mehrbasiger Carbonsäuren, Amidine, z.B. Dicyandiamid, Hydrazine, Harnstoffe, Poly-(N-vinyllactame) und Erdalkalisalze von aliphatischen, vorzugsweise hydroxylgruppenhaltigen, ein-bis dreibasigen Carbonsäuren mit 2 bis 20 Kohlenstoffatomen, z.B. Calciumstearat, Calciumrizinoleat, Calciumlactat und Calciumcitrat. Als Oxidationsstabilisatoren werden vor allem Bisphenolverbindungen verwendet, vorzugsweise Diester von einbasigen 4-Hydroxyphenylalkansäuren, die 7 bis 13, vorzugsweise 7,8 oder 9 Kohlenstoffatome aufweisen, mit Diolen, die 2 bis 6 Kohlenstoffatome enthalten. Als Lichtstabilisatoren sind beispielsweise α-Hydroxybenzophenonderivate und Benzotriazolderivate geeignet. Die Stabilisatoren werden zumeist in einer Menge von insgesamt 0,1 bis 5 Gew.%, vorzugsweise 0,5 bis 3 Gew.%, bezogen auf das Gewicht der Komponenten (A) und (B) verwendet.

Als Zusatzstoffe (e) können ferner verstärkend wirkende Füllstoffe, vorzugsweise Fasern, beispielsweise Kohlenstoff-oder insbesondere Glasfasern, die mit Haftvermittlern und/oder Schlichten ausgerüstet sein können, Anwendung finden.

Die Fasern, die in Mengen von 5 bis 50 Gew.%, vorzugsweise von 10 bis 40 Gew.%, bezogen auf das Gewicht der Komponenten (A) und (B) eingesetzt werden, weisen zweckmäßigerweise einen Durchmesser von 5 bis 20 μm, vorzugsweise von 8 bis 15 μm auf und besitzen im Granulat der POM/TPU-Formmassen im allgemeinen eine mittlere Faserlänge von 0,05 bis 1 m, vorzugsweise von 0,1 bis 0,5 mm.

Anstelle der Fasern, insbesondere Glasfasern, oder in Kombination mit diesen, können die Formmassen auch andere Füll-oder Verstärkungsmittel enthalten. Genannt seien beispielsweise Glaskugeln, Talkum, Kaolin, Wollastonit, Glimmer oder Kreide, die in Mengen von 3 bis 50 Gew.%, bezogen auf das Gewicht der Komponenten (A) und (B) verwendet werden können.

Die verstärkend wirkenden Füllstoffe können hierbei als Zusatzstoffe(e) den Aufbaukomponenten zur Herstellung des TPU(B) oder der TPU-Raktionsmischung einverleibt und zusammen mit diesen in die POM-Schmelze eingebracht werden oder anschließend in die erhaltene POM/TPU-Formmasse nach bekannten Methoden eingearbeitet werden.

Als thermoplastische Polyurethan-Elastomeren (B) besonders bewährt haben sich und daher vorzugsweise verwendet werden Produkte, die hergestellt werden durch Umsetzung von bzw. deren Reaktionsmischungen intermediär enthalten:

a) aromatische(n) diisocyanate(n), vorzugsweise 4,4'-Diphenylmethan-diisocyanat,

b) im wesentlichen linear(n) Polyhydroxylverbindungen, vorzugsweise Alkylenglykolpolyadipate(n) mit 2 bis 6 Kohlenstoffatomen im Alkylenglykolrest und Molekulargewichten von 800 bis 3 500 oder Polyoxitetramethylenglykole(n) mit einem Molekulargewicht von 800 bis 3 500 und

c) Butandiol-1,4

Zur Herstellung der POM/TPU-Formmassen nach dem erfindungsgemäßen Verfahren werden die Polyoximethylenhomo-und/oder -copolymeriste (A) in geschmolzener Form verarbeitet. Nach dem bevorzugt angewandten Herstellungsverfahren werden die Aufbaukomponenten (a) bis (c) sowie gegebenenfalls (d) und (e) zur Herstellung des TPU (B) nach bekannten Mischtechniken, vorzugsweise mittels eines Niederdruckmischkopfs, bei Temperaturen bis 150° C, vorzugsweise von 60 bis 150° C und insbesondere 70 bis 100° C gemischt und die erhaltene Reaktionsmischung in die Schmelze aus POM (A) bei Temperaturen von 170 bis 260° C, vorzugsweise von 190 bis 240° C eingemischt. Nach einer anderen Verfahrensvariante wird mindestens eine Polyurethan-Aufbaukomponente (a) bis (c) bei Temperaturen von 170 bis 260° C der Schmelze aus POM (A) einverleibt und das erhaltene Gemisch in dem vorgenannten Temperaturbereich mit den anderen Aufbaukomponenten zur Herstellung des thermoplastischen Polyurethans (B) zur Reaktion gebracht. Es ist jedoch auch möglich, aus den TPU-Aufbaukomponenten (a) und (b) sowie gegebenenfalls Teilen von (c) ein NCO-Gruppen enthaltendes Prepolymer herzustellen und dieses mit den restlichen Ausgangsstoffen und/oder Teilmengen davon zur Herstellung des TPU (B) gleichzeitig oder nacheinander bei den obengenannten Temperaturen in die POM (A)-Schmelze einzubringen.

Zum Einbringen der Aufbaukomponenten oder vorzugsweise der Reaktionsmischung zur Herstellung des TPU's (B) in die Schmelze aus POM (A) eignen sich die an sich bekannten Mischaggregate, wobei zweckmäßigerweise Mischaggregate, die mit einer hohen Scherintensität arbeiten, Anwendung finden. Beispielhaft genannt seien Cokneter und vorzugsweise Extruder, wie z.B. Zweiwellenextruder.

Nach Einbringung der TPU-Reaktionsmischung in die POM-Schmelze und Bildung des TPU in der POM-Schmelze wird die erhaltene POM/TPU-Formmasse zerkleinert oder, falls die Reaktions in einem Extruder durchgeführt wird, zu Strängen ausgepreßt und granuliert. Das Granulat kann bei Raumtemperatur gelagert werden oder es wird vorzugsweise einer Temperaturnachbehandlung bei 30 bis 160° C, vorzugsweise bei 80 bis 140° C funterworfen, die in Abhängigkeit von der Behandlungstemperatur üblicherweise nach 6 bis 72 Stunden, vorzugsweise 8 bis 30 Stunden beendet wird.

Die nach dem erfindungsgemäßen Verfahren hergestellten POM/TPU-Formmassen zeichnen sich, wie bereits dargelegt wurde, durch eine hervorragende Schlagzähigkeit, auch bei tiefen Temperaturen aus. Die Produkte zeigen eine helle Eigenfarbe und hohe Beständigkeit gegen organische und anorganische Lösungsmittel. Das erfindungsgemäße Verfahren arbeitet außerdem erheblich kostengünstiger als die zum Stande der Technik gehörenden konventionellen Methoden.

Beispiel 1

a) Herstellung der TPU-Reationsmischung:

Aus Vorratsbehältern wurden mittels Zahnradpumpen kontinuierlich 20 kg/h eines 1.4-Butandiolpolyadipats mit einem Molekulargewicht von 2 000 und einer Temperatur von 80° C,
8,87 kg/h 4,4'-diphenylmethan-diisocyanat mit einer Temperatur von 60° C
und
2,25 kg/h 1.4-Butandiol mit einer Temperatur von 23° C
einem Niederdruckmischkopf mit einem Mischkammervolumen von 65 cm$^3$ zugeführt und in diesem mit einem Schneckenrührer bei einer Drehzahl von 5 000 Upm intensiv vermischt. Man erhielt eine homogene, transparente Reaktionsmischung.

b) Herstellung der POM/TPU-Formmasse:

124,4 mg/h eines Polyoximethylencopolymerisats mit einem MFI = 9 g/10 min bei 190°C 21, 17 N (DIN 53 735), hergestellt durch Copolymerisation von 97,5 Gew.tilen Trioxan und 2,5 Gew.teilen 1.4-Butandiolformal, wurden in einem Zweiwellenextruder mit einem Schneckendurchmesser von 83 mm und einem Verhältnis von Länge zu Durchmesser der Schnecke von 28 bei 200°C aufgeschmolzen und kontinuierlich bei dieser Temperatur mit 31, 12 kg/h der unter Beispiel 1a beschriebenen TPU-Reaktionsmischung gemischt. An der Einbringungsstelle für die TPU-Reaktionsmischung des Extruders besaß die Extruderschnecke mehrere Knetblöcke, um eine innige Durchmischung der Komponente zu erzielen. Nach Durchlaufen des Extruders wurde die POM/TPU-Formmasse in Strängen extrudiert und granuliert. Das Granulat wurde bei 120°C 20 Stunden lang einer Nachbehandlung unterworfen. Aus dem so nachbehandelten Granulat wurden mittels der Spritzgußtechnik Prüfkörper hergestellt, an denen folgende mechanische Eigenschaften gemessen wurden:
50% Bruchenergie nach DIN 53 443 an 2 mm Starken Rundscheiben
bei 23° C : 52 Nm,
bei -40°C : 18 Nm
Lochkerbschlagzähigkeit nach DIN 53 753 -L-3.0 (Ausgabe 4/81)
bei 23° C : 57 kJ/m$^2$
bei -40°C : 28 kJ/m$^2$
Das unmodifizierte Polyoximethylencopolymerisat besaß vergleichsweise eine 50% Bruchenergie nach DIN 53 443 and 2 mm starken Rundscheiben
bei 23° C von 2 Nm und
bei -40°C von 1 Nm
sowie eine Lochkerbschlagzähigkeit nach DIN 53 753-L-3.0 (Ausgabe 4/81)
bei 23° C von 22 kJ/m$^2$ und
bei -40°C von 18 kJ/m$^2$

Beispiel 2

Man verfuhr analog den Angaben des Beispiels 1, verwendete jedoch als Ausgangsstoffe für die TPU-Reaktionsmuschung
20 kg/h eines Polyoxitetramethylenglykols mit einem Molekulargewicht von 2 000,
7,65 kg/h 4,4'-Diphenylmethan-diisocyanat und
1,8 kg/h 1.4-Butandiol
sowie
118 kg/h eines Polyoximethylenhomopolymerisats aus Trioxan mit einem MFI = 15 g/10 min bei 190° C 21, 17 N (DIN 53 735).

Die aus der POM/TPU-Formmasse hergestellten Prüfkörper zeigten folgende mechanische Eigenschaften
50% Bruchenergie nach DIN 53 443 an 2 mm starken Rundscheiben

bei 23° C : 44 Nm und

bei -40° C : 19 Nm.

Lochkerbschlagzöhigkeit nach DIN 53 753 -L-30 (Ausgabe 4/81)

bei 23° C : 54 kJ/m² und

bei -40° C : 25 kJ/m² .

Beispiel 3

Man verfuhr analog den Angaben des Beispiels 1, verwendete jedoch als Ausgangsstoffe zur Herstellung der TPU-Reaktionsmischung:
40 kg/h eines 1,4-Butandion-polyadipats mit einem Molekulargewicht von 2 000,
17,74 kg/h 4,4'-Diphenylmethan-diisocyanat und
4,5 kg/h 1.4-Butandiol
sowie
94 kg/h eines Polyoximethylencopolymerisats mit einem MFI = 27 g/10 min bei 190° C 21, 17 N (DIN 53 735), hergestellt aus 97,5 Gew.-Teilen Trioxan und 2,5 Gew.-Teilen Ethylenoxid als Comonomer.

An den aus der POM/TPU-Formmasse mittels der Spritzgußtechnik hergestellten Prüfkörper wurden die folgenden mechanischen Eigenschaften gemessen:
50 % Bruchenergie nach DIN 53 443 an 2 mm starken Rundscheiben

bei 23° C : 72 Nm und

bei -40° C : 21 Nm .

Lochkerbschlagzähigkeit nach DIN 53 753 -L-30 (Ausgabe 4/81)

bei 23° C : 66 kJ/m² und

bei -40° C : 27 kJ/m²

**Ansprüche**

1. Verfahren zur Herstellung von Formmassen mit verbesserter Kälteschlagzähigkeit aus
(A) Polyoximethylenen und
(B) thermoplastiscen Polyurethanen,
dadurch gekennzeichnet, daß man bei erhöhten Temperaturen
Polyoximethylenhomo-und/pder -copolymerisate (A)

i) mit mindestens einer Polyurethan-Aufbaukomponente mischt und das Gemisch mit den anderen Aufbaukomponenten zur Herstellung des thermoplastischen Polyurethans (B) zur Reaktion bringt oder

ii) mit der fließfähigen Reaktionsmischung zur Herstellung des thermoplastischen Polyurethans (B) mischt und diese ausreagieren läßt.

2. Verfahren nach Anspruch 1, dadurch gekennzeichnet, daß man die Polyoximethylenhomo-und/oder -copolymerisate (A) in geschmolzener Form verarbeitet.

3. Verfahren nach Anspruch 1, dadurch gekennzeichnet, daß man die Polyoximethylenhomo-und/oder -copolymerisate (A) bei Temperaturen von 170 bis 260° C mit mindestens einer der Aufbaukomponenten oder vorzugsweise der Reaktionsmischung zur Herstellung des thermoplastischen Polyurethans (B) mischt.

4. Verfahren nach Anspruch 1, dadurch gekennzeichnet, daß man die Polyoximethylenhomo-und/oder -copolymerisate (A) mit mindestens einer der Aufbaukomponenten oder vorzugsweise der Reaktionsmischung zur Herstellung des thermoplastischen Polyurethans (B) bei Temperaturen von 170 bis 260° C in einem Reaktionsextruder mischt, gegebenenfalls die anderen Aufbaukomponenten zur Herstellung des thermoplastischen Polyurethans (B) dem Extruder zuführt und die Reaktion zu Ende führt.

5. Verfahren nach Anspruch 1, dadurch gekennzeichnet, daß die erhaltene Formmasse die Polyoximethylenhomo-und/oder -copolymerisate (A) und die thermoplastischen Polyurethane (B) im Gewichtsverhältnis 95:5 bis 40:60 enthält.

6. Verfahren nach Anspruch 1, dadurch gekennzeichnet, daß die Polyoximethylenhomo-und/oder -copolymerisate (A) ein durchschnittliches Molekulargewicht von 2 000 bis 100 000 und einen MFI bei 190° C, 21 17 N nach DIN 53 735 von 0,5 bis 200 besitzen.

7. Verfahren nach Anspruch 1, dadurch gekennzeichnet, daß die thermoplastischen Polyurethan-Elastomeren (B) hergestellt werden durch Umsetzung von bzw. die Reaktionsmischungen intermediär enthalten

a) aromatische(n) Diisocyanate(n), vorzugsweise 4,4'-Diphenylmethan-diisocyanat,

b) im wesentlichen lineare(n) Polyhydroxylverbindungen, vorzugsweise Alkylenglykolpolyadipate(n) mit 2 bis 6 Kohlenstoffatomen im Alkylenglykolrest und Molekulargewichten von 800 bis 3 500 oder Polyoxitetramethylen-glykole(n) mit einem Molekulargewicht von 800 bis 3 500 und

c) Butandiol-1.4.

# EUROPÄISCHER RECHERCHENBERICHT

**Europäisches Patentamt**

## EINSCHLÄGIGE DOKUMENTE

EP 88101452.6

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | US - A - 3 697 624 (BRAUNSTEIN) <br><br> * Ansprüche 9,16; Spalte 6, Zeilen 59-63 * <br><br> -- | 1-7 | C 08 G 18/66 <br> C 08 L 59/00 |
| D,Y | DE - C - 1 193 240 (FARBENFABRIKEN BAYER AKTIENGESELLSCHAFT) <br><br> * Ansprüche; Beispiele 1,2; Spalte 2, Zeilen 23-32 * <br><br> ---- | 1-7 | |

**RECHERCHIERTE SACHGEBIETE (Int. Cl.4)**

C 08 G  2/00

C 08 G 18/00

C 08 L 59/00

Der vorliegende Recherchenbericht wurde für alle Patentansprüche erstellt.

| Recherchenort | Abschlußdatum der Recherche | Prüfer |
|---|---|---|
| WIEN | 05-05-1988 | WEIGERSTORFER |